# DEMANDE DE BREVET EUROPEEN

(11) **EP 0 637 145 A1**
(43) Date de publication de la demande: **01.02.1995**
(21) Numéro de dépôt: 94401725.0
(22) Date de dépôt: 27.07.1994
(51) Int. Cl.: H04B 7/26

(54) **Procédé de couverture des zones d'ombre d'un système cellulaire de radiocommunications mobiles, et répéteur radio pour la mise en oeuvre de ce procédé**

(30) Priorité: 30.07.1993 FR 9309426
(71) Demandeur: ALCATEL MOBILE COMMUNICATION FRANCE, 75008 Paris (FR); ALCATEL N.V., NL-1077 XX Amsterdam (NL)
(72) Inventeur: Dupuy, Pierre, F-75017 Paris (FR)
(74) Mandataire: Fournier, Michel

(57) **Abrégé**

Procédé de couverture des zones d'ombre d'un réseau de radiocommunications comprenant au moins :
- une station émettrice/réceptrice de base, pour émettre et recevoir, sur différentes fréquences (f_{P1}, f_{P2}, f'_{P1}, f'_{P2}), dites fréquences de base, des signaux radio à destination et en provenance de mobiles,
- un répéteur radio pour recevoir, amplifier et ré-émettre ces signaux radio à destination et en provenance d'au moins une zone d'ombre,
   ledit procédé étant caractérisé en ce que :
- un signal radio reçu par un répéteur radio en provenance de la station de base et porté par une fréquence de base (f_{P2}) est ré-émis à destination d'un mobile par sur une fréquence (f_{R12}), dite transposée, différente de la fréquence de base (f_{P2}) et associée à cette dernière selon une relation de transposition telle que d'une part, chacune des fréquences de base (f_{P1}, f_{P2}, f'_{P1}, f'_{P2}) soit est associée à au moins une fréquence transposée (f_{R11}, f_{R12}, f'_{R11}, f'_{R12}), soit n'est associée à aucune fréquence transposée, et d'autre part, la différence entre la valeur d'une fréquence transposée et la valeur de la fréquence de base associée n'est pas la même pour toutes les fréquences transposées,
- inversement, un signal radio reçu par un répéteur radio en provenance d'un mobile et porté par une fréquence transposée (f'_{R12}) est ré-émis à destination de la station de base sur la fréquence de base (f'_{P2}) associée.

## Description

La présente invention concerne un procédé de couverture des zones d'ombre d'un système cellulaire de radiocommunications mobiles, ainsi qu'un répéteur radio pour la mise en oeuvre de ce procédé.

Dans les systèmes cellulaires de radiocommunications mobiles, l'environnement dans lequel se trouvent les stations émettrices/réceptrices fixes ou mobiles comporte des obstacles dus par exemple au terrain ou à des constructions.

Du fait de la directivité plus ou moins grande de la propagation radio, il existe alors au voisinage de ces obstacles des zones d'ombre radio, c'est-à-dire des zones dans lesquelles les ondes radio peuvent être partiellement bloquées, ou absorbées, par une quelconque caractéristique de l'environnement, de sorte qu'elles risquent d'être fortement atténuées.

Des zones d'ombre peuvent également exister en bout de portée des émetteurs des stations fixes du réseau.

Ainsi, le signal transporté peut subir des dégradations importantes.

Afin de résoudre ce problème, plusieurs solutions ont déjà été envisagées.

Une première solution consiste à utiliser un répéteur radio, comprenant un émetteur/récepteur associé à une antenne et muni d'un amplificateur, placé au niveau des zones d'ombre. Ce répéteur radio est à large bande, c'est-à-dire qu'il peut recevoir et ré-émettre une grande partie du spectre de fréquences utilisé dans le réseau de radiocommunications auquel il appartient.

Il a pour fonction de recevoir les ondes radio au niveau des zones d'ombre, de les amplifier puis de les ré-émettre sur la même fréquence, sous un angle différent. Il est donc pratiquement "transparent", c'est-à-dire qu'il ne modifie pas les caractéristiques de l'onde ré-émise, excepté son amplitude. L'avantage apporté par l'utilisation d'un répéteur est l'autonomie sur le plan filaire de ce dernier : aucune connexion par câblage n'est nécessaire. Cette solution est donc peu coûteuse.

Toutefois, cette solution n'est pas satisfaisante, car on observe, surtout lorsque le répéteur est peu éloigné de la station émettrice/réceptrice fixe qu'il relaie, un phénomène du type de l'effet Larsen (oscillation parasite prenant naissance lorsque la sortie d'une chaîne électroacoustique, par exemple le haut-parleur, réagit sur son entrée, en général le microphone, et se manifestant par un sifflement). Ce phénomène a pour conséquence, dans le cas des ondes radio, de créer des parasites dans le signal transmis.

Une solution pour éviter ce problème consiste alors à utiliser un répéteur effectuant une translation ou une transposition de la fréquence des signaux reçus avant de les ré-émettre. Une telle solution est décrite par exemple dans la demande de brevet GB-2 253 324.

Cependant, on a constaté que cette solution n'est pas satisfaisante dans le cas des systèmes cellulaires de radiocommunications mobiles, car elle ne permet pas à la station de base de déterminer si une transposition de fréquence a été effectuée, à moins d'utiliser aux frontières entre les cellules des dispositifs de transposition inverse de fréquences, ce qui est coûteux en matériel. Pour éviter ces problèmes, on peut recourir à une autre solution dans les systèmes de radiocommunications mobiles cellulaires. Cette solution consiste à multiplier le nombre de cellules, et donc le nombre de stations de base, notamment en créant des cellules supplémentaires pour couvrir les zones d'ombre.

Cette solution présente l'avantage d'éviter les problèmes posés par la solution précédente, et d'être efficace.

Cependant, elle pose également des problèmes.

En premier lieu, elle est très coûteuse sur le plan installation, car contrairement à un répéteur radio, une station de base d'un réseau cellulaire doit être reliée par câblage notamment à un contrôleur de stations de base et à un centre de commande et de maintenance du réseau.

De plus, une station de base d'un réseau cellulaire, étant donné sa complexité, est coûteuse en elle-même.

Le but de la présente invention est donc de mettre au point un procédé permettant d'assurer la couverture des zones d'ombre d'un système cellulaire de radiocommunications mobiles, qui soit peu onéreux à mettre en oeuvre tout en garantissant une bonne qualité des signaux radio, tel que les stations de base soient capables de déterminer si les signaux reçus sont portés par une fréquence transposée par un répéteur sans avoir à utiliser de dispositifs de transposition inverse.
La présente invention propose à cet effet un procédé de couverture des zones d'ombre d'un système cellulaire de radiocommunications mobiles comprenant une pluralité de cellules, chacune desdites cellules étant couverte par une station émétrice/réceptrice dite station de base, destinée à émettre et à recevoir, sur différentes fréquences, dites fréquences de base, des signaux radio à destination et en provenance de stations mobiles évoluant dans ladite cellule, et chaque zone d'ombre appartenant à l'une desdites cellules, un répéteur radio étant associé à chacune desdites zones d'ombre pour recevoir, amplifier et ré-émettre lesdits signaux radio à destination et en provenance de stations mobiles évoluant dans ladite zone d'ombre, le répéteur destiné à couvrir une zone d'ombre donnée dépendant de la station de base de la cellule dans laquelle se trouve ladite zone d'ombre, ledit procédé étant tel que :
- un signal radio reçu par l'un desdits répéteurs en provenance de ladite station de base et porté par une fréquence de base est ré-émis à destination de l'une desdites stations mobiles par ledit répéteur sur une fréquence, dite fréquence transposée, différente de ladite fréquence de base et associée à cette dernière selon une relation, dite de transposition, connue de moyens de commande de ladite station de base,
- inversement, un signal radio reçu par l'un desdits répéteurs en provenance de l'une desdites stations mobiles et porté par une fréquence transposée est ré-émis à destination de ladite station de base par ledit répéteur sur la fréquence de base associée à ladite fréquence transposée, la fréquence de la voie balise de chaque cellule étant toujours associée à une fréquence transposée, dite voie balise transposée, au niveau de chacun desdits répéteurs, ledit procédé étant caractérisé en ce que, lorsqu'une station mobile située dans une zone d'ombre d'une cellule émet, sur un canal spécifique dit canal d'accès, porté par une voie balise transposée, un signal radio, appelé demande d'accès, en vue d'établir une connexion radio avec la station de base de ladite cellule, afin qu'un canal dit de trafic lui soit affecté, le répéteur destiné à couvrir ladite zone d'ombre, après avoir reçu ladite demande d'accès, la retransmet à ladite station de base sur ladite voie balise après l'avoir modifiée de sorte que lesdits moyens de commande, auxquels est retransmise par ladite station de base ladite demande d'accès modifiée, sont capables de déterminer que ladite station mobile se trouve dans une zone d'ombre, et de déduire la relation de transposition qui permet d'obtenir les fréquences transposées associées à cette zone d'ombre, de sorte que le signal émis par lesdits moyens de commande et destiné à indiquer à ladite station mobile quel canal de trafic et quelles fréquences elle doit utiliser pour l'émission et la réception, contient lesdites fréquences transposées au lieu des fréquences de base associées.

En effectuant une transposition des fréquences ré-émises, le phénomène du type de l'effet Larsen observé habituellement avec les répéteurs radio ne se produit pas.

Selon l'invention, les répéteurs possèdent plusieurs fonctions. Une première de ces fonctions consiste à transposer les fréquences reçues, et une seconde à modifier les demandes d'accès reçues. Ces fonctions sont toutefois beaucoup plus simples que celles remplies par une station de base classique, de sorte que le coût matériel d'un répéteur utilisé dans le procédé selon l'invention, bien qu'étant supérieur au coût d'un répéteur classique, est bien inférieur à celui d'une station de base.

Le répéteur qui reçoit une demande d'accès en provenance d'une station mobile, émise par cette dernière comme si elle se trouvait au pied de la station de base, c'est-à-dire avec une avance temporelle nulle par rapport à la station de base, ré-émet la demande d'accès modifiée correspondante avec une avance temporelle, dite partielle, correspondant à la distance qui le sépare de la station mobile, de sorte que l'avance temporelle indiquée ensuite par la station de base à la station mobile, et à utiliser par cette dernière lors de toute émission ultérieure à destination de la station de base, correspond à la somme de l'avance temporelle partielle et de l'avance temporelle correspondant à la distance séparant le répéteur de la station de base.

Une troisième fonction d'un répéteur adapté à la mise en oeuvre du procédé selon l'invention consiste donc à déterminer l'avance temporelle primaire. Cette fonction permet en outre de décoder correctement les demandes d'accès, ce qui est nécessaire pour effectuer leur modification dans le cas particulier mentionné ci-dessus.

Il est très avantageux de permettre au répéteur de ré-émettre la demande d'accès modifiée vers la station de base associée avec une avance temporelle non nulle. Ainsi en effet, la station de base peut déterminer directement l'avance temporelle totale que la station mobile doit utiliser.

Par ailleurs, lorsque le saut de fréquences est appliqué dans une cellule dans laquelle se trouve une zone d'ombre, et lorsque le répéteur destiné à couvrir cette zone d'ombre utilise moins de fréquences que la station de base de la cellule, le canal de trafic affecté à une station mobile se trouvant dans la zone d'ombre est soit porté par des fréquences de base ayant chacune une fréquence transposée associée, soit un canal sans saut de fréquences.

Une quatrième fonction des répéteurs dans le procédé de l'invention consiste donc à appliquer le saut de fréquences.

De préférence, toutes les voies balises transposées d'une même voie balise sont mises en mémoire au sein des moyens de commande.

Pour éviter les interférences, le choix des fréquences transposées est tel que des zones d'ombre voisines utilisent des jeux de fréquences transposées distincts, de manière à définir des classes de zones d'ombre, une classe de zones d'ombre comprenant toutes les zones d'ombre utilisant le même jeu de fréquences transposées, et étant représentée par une relation de transposition différente de celles représentant les autres classes de zones d'ombre.

Lorsque le saut de fréquences est appliqué dans une cellule par l'intermédiaire d'une loi dite de répétition, le saut de fréquences peut alors également être appliqué dans les zones d'ombre se trouvant dans cette cellule, les lois de répétition utilisées par les répéteurs couvrant ces zones d'ombre étant soit identiques, soit différentes de la loi de répétition utilisée par la station de base de la cellule, le canal de signalisation porté par la voie balise étant cependant toujours un canal sans saut de fréquences.

Les moyens de commande peuvent alors notamment déduire de la demande d'accès modifiée la classe de la zone d'ombre.

Lorsque le sytème cellulaire de radiocommunications utilise le principe de l'accès multiple à répartition dans le temps, la modification de la demande d'accès peut consister par exemple en un changement de canal : le répéteur ré-émet la demande d'accès sur un canal, dit canal d'accès modifié, ayant une position temporelle différente de celle du canal d'accès, le canal d'accès modifié étant connu des moyens de commande comme spécifique à la ré-émission des demandes d'accès des stations mobiles provenant d'une zone d'ombre de classe prédéterminée.

Cette solution est particulièrement simple à mettre en oeuvre.

De manière très avantageuse dans ce cas, les canaux dans le sens descendant, c'est-à-dire dans le sens station de base vers station mobile, associés aux canaux d'accès modifiés, sont soit inutilisés pour le trafic, soit utilisés pour la commande et le contrôle des répéteurs.

Lorsqu'une station mobile se trouvant dans une zone d'ombre et rattachée à une station de base par l'intermédiaire du répéteur couvrant cette zone d'ombre doit être rattachée directement à la station de base sous la couverture de laquelle se trouve cette zone d'ombre, une procédure de handover est suivie.

Lorsqu'une station mobile rattachée à une station de base soit directement soit par l'intermédiaire d'un répéteur couvrant une première zone d'ombre doit être rattachée au répéteur d'une deuxième zone d'ombre, la station de base communique aux moyens de commande la voie balise transposée associée à cette deuxième zone d'ombre, et les moyens de commande en déduisent la relation de transposition qui permet d'obtenir les fréquences transposées associées à cette deuxième zone d'ombre, de sorte que le signal émis par les moyens de commande et destiné à indiquer à la station mobile quel canal de trafic et quelles fréquences elle doit utiliser pour l'émission et la réception, contient les fréquences transposées utilisées par le répéteur de la deuxième zone d'ombre au lieu des fréquences de base associées.

Selon un mode de réalisation avantageux, la station de base a en mémoire toutes les voies balises transposées associées à sa voie balise par la relation de transposition.

D'autre part, la relation de transposition est de préférence monotone et croissante lorsque le système de radiocommunications applique le principe du saut de fréquences.

Enfin, la relation de transposition à utiliser par chaque répéteur lui est fournie par des moyens de commande et de maintenance du réseau, cette relation pouvant être modifiée.

La présente invention concerne également un répéteur pour la mise en oeuvre du procédé qui vient d'être exposé.

Ce répéteur peut comporter :
- au moins un émetteur/récepteur,
- au moins une antenne associée audit émetteur/récepteur,
- des moyens pour transposer la fréquence des signaux reçus en provenance desdites stations mobiles ou desdites stations de base,
- des moyens pour appliquer le saut de fréquences,
- des moyens pour déterminer l'avance temporelle correspondant à la distance qui le sépare d'une station mobile,
- des moyens pour modifier les demandes d'accès en provenance desdites stations mobiles,
- des moyens pour sa commande et sa maintenance par voie radio par des moyens de commande et de maintenance du réseau.

D'autres caractéristiques et avantages de la présente invention apparaîtront dans la description suivante d'un procédé selon l'invention et d'un exemple de mise en oeuvre de ce dernier, donnée à titre illustratif et nullement limitatif.

Dans les figures suivantes :
- la figure 1 représente schématiquement la structure d'une cellule d'un réseau de radiocommunications cellulaire, cette cellule comprenant des zones d'ombres couvertes selon le procédé de l'invention,
- la figure 2 montre comment un répéteur selon l'invention peut être installé en pratique au niveau d'une zone d'ombre,
- la figure 3 est un schéma synoptique illustrant le fonctionnement d'un répéteur selon le procédé de l'invention, dans le cas de la transmission de signaux autres que des demandes ou des messages d'accès,
- la figure 4 représente certains des signaux échangés lors d'une procédure de connexion d'une station mobile à la station de base de la cellule de la figure 1, conformément au procédé de l'invention,
- la figure 5 montre un schéma représentant une organisation temporelle possible des différents canaux de transmission radio, dans le sens descendant, adaptée au procédé selon l'invention.

Dans toutes ces figures, les éléments communs portent les mêmes numéros de référence.

Dans toute la suite, on s'attachera, pour des raisons de clarté, à décrire le procédé selon l'invention sur un exemple particulier donné bien évidemment à titre purement illustratif.

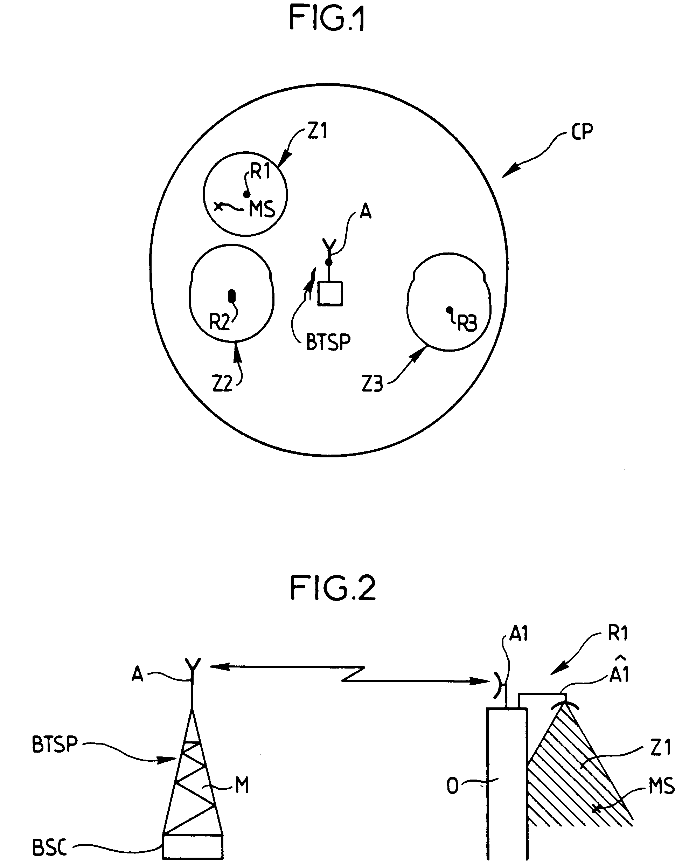

Cet exemple concerne l'application du procédé selon l'invention à une cellule d'un système cellulaire de radiocommunications mobiles de type GSM. On a représenté en figure 1 une cellule CP, appelée cellule parapluie, dont les caractéristiques générales sont classiques dans le réseau GSM :
- elle couvre une zone géographique schématiquement circulaire,
- elle est munie en son centre d'une station émettrice/réceptrice, ou station de base, BTSP, qui comporte notamment un émetteur/récepteur radio muni d'une antenne d'émission et de réception A,
- la station de base BTSP peut émettre des signaux radio sur plusieurs fréquences distinctes, appelées fréquences de base, qui lui ont été affectées lors de la configuration du réseau de sorte qu'il n'y ait pas d'interférences entre la cellule CP et les cellules voisines (non représentées), chaque fréquence réservée à l'émission (sens descendant) étant associée à une et une seule fréquence distincte réservée à la réception (sens montant) ; sur le plan des protocoles, la cellule CP est associée à des numéros, chaque numéro représentant une paire de fréquences, c'est-à-dire une fréquence dans le sens montant et une fréquence dans le sens descendant.

Plusieurs obstacles aux ondes radio (non représentés) se trouvent dans la cellule CP, et créent des zones d'ombre Z1, Z2, Z3. Un répéteur radio R1, R2, R3 est installé par exemple au centre de chaque zone d'ombre Z1, Z2, Z3 respectivement. La couverture radio de chacun de ces répéteurs est schématisée par un cercle.

Le phénomène de zone d'ombre est illustré de manière simplifiée en figure 2, où l'on voit la station de base BTSP, dont l'antenne A est montée sur un mât M, un obstacle O au haut duquel est monté le répéteur R1, comprenant une antenne A1 disposée pour émettre et recevoir des signaux respectivement à destination et en provenance de BTSP, et une antenne 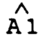 pour émettre et recevoir des signaux radio respectivement à destination et en provenance de stations mobiles munies d'émetteurs/récepteurs, et notamment de l'une d'entre elles notée MS, situées dans la zone d'ombre Z1 (hachurée sur la figure 2) due à l'obstacle O.

On supposera que quatre fréquences f_{P1}, f_{P2}, f_{P3} et f_{P4} sont associées à BTSP pour l'émission. Les fréquences correspondantes pour la réception sont notées avec des primes. f_{P1} est la fréquence de la voie balise de la cellule CP.

On décrit à présent le déroulement des échanges de signaux radio entre la station de base BTSP et la station mobile MS se trouvant dans la zone d'ombre Z1, et ce dans le cas de signaux radio autres que les demandes d'accès émises par la station mobile lors de la procédure d'accès.

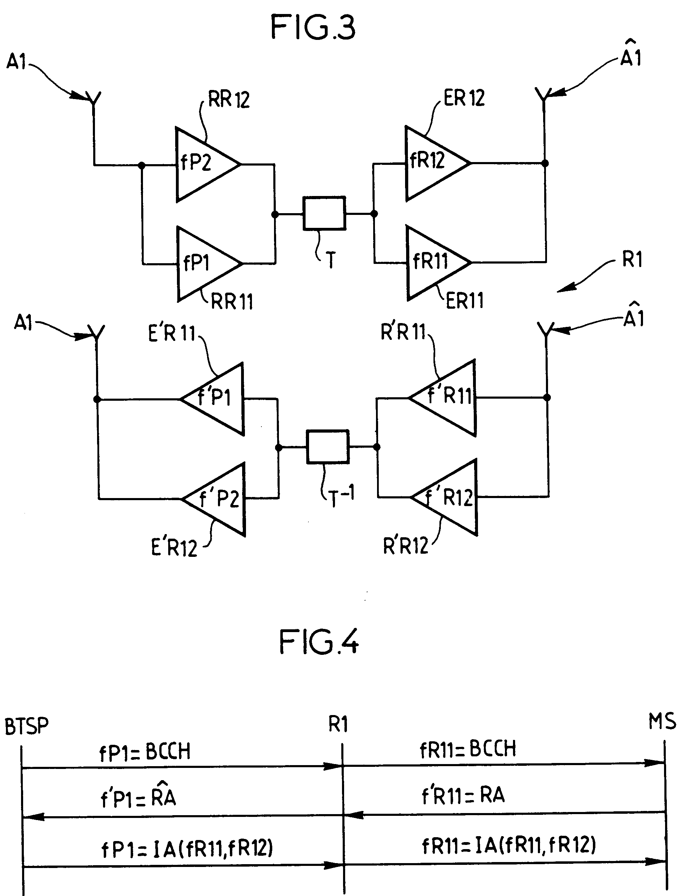

Lorsqu'un signal radio est émis par BTSP à destination du mobile MS se trouvant dans la zone d'ombre Z1, sur la fréquence f_{P2} par exemple, il est reçu par l'antenne A1 puis par un récepteur RR12 (voir figure 3) du répéteur R1. Ce dernier, avant de ré-émettre ce signal à destination du mobile MS, en transpose la fréquence. Cette opération est schématisée par le bloc référencé T en figure 3.

Le signal est ensuite ré-émis vers la station mobile MS par l'émetteur ER12 et l'antenne 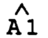 du répéteur R₁ sur la fréquence transposée associée à f_{P2}, notée f_{R12}.

Pour éviter les problèmes d'interférences co-canal, la fréquence f_{R12} est distincte de la fréquence f_{P2} ainsi que de toutes les autres fréquences associées à BTSP et de toutes les fréquences transposées associées à ces dernières. Pour la même raison, lors de la configuration d'un réseau utilisant le procédé selon l'invention, on prendra garde à choisir pour chaque zone d'ombre des fréquences transposées suffisamment éloignées de celles associées aux autres zones d'ombre et de celles des cellules voisines de la cellule CP.

La transposition peut être schématisée par une relation dite de transposition, telle que chacune des fréquences de base de BTSP soit est associée à au moins une fréquence transposée (on verra plus loin le cas particulier dans lequel une fréquence de base est associée à plus d'une fréquence transposée), soit n'est associée à aucune fréquence transposée. En outre, la différence entre la valeur d'une fréquence transposée et la valeur de la fréquence de base associée peut ne pas être la même pour toutes les fréquences transposées.

Lorsqu'une fréquence d'émission est associée à une fréquence transposée, la fréquence de réception correspondante est également associée à une fréquence transposée.

De plus, la fréquence de la voie balise doit bien évidemment toujours être associée à une fréquence transposée, puisqu'elle porte les canaux de signalisation. Dans l'exemple choisi, cette fréquence transposée est notée f_{R11}.

Ce qui suit concerne le cas où une fréquence de base est associée à au plus une fréquence transposée.

A la réception d'un sianal en provenance du mobile MS sur la fréquence f'_{R12} par l'antenne 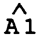 puis par un récepteur R'_{R12}, le répéteur R1 applique l'inverse de la relation de transposition, cette opération étant symbolisée par le bloc reférencé T⁻¹ en figure 3, puis ré-émet ensuite ce signal sur la fréquence f'_{P2} au moyen d'un émetteur E'R12 puis de l'antenne A1 à destination de BTSP.

Il est en effet nécessaire, pour éviter les problèmes de l'art antérieur, que la station mobile n'utilise, aussi bien à l'émission qu'à la réception, que des fréquences transposées.

Tout ce qui vient d'être décrit s'applique à l'émission et à la réception de tous les signaux autres que des demandes d'accès, soit sur la voie balise utilisée pour le trafic, soit sur les autres fréquences.

La ou les relations de transposition utilisées (il n'est pas nécessaire, et parfois pas souhaitable pour des raisons que l'on donnera plus loin, que tous les répéteurs utilisent la même relation de transposition) peuvent être fixées une fois pour toutes lors de l'installation du réseau. Toutefois, il est préférable, pour des raisons évidentes de flexibilité et d'adaptation notamment à la densité du trafic de communications, de prévoir une évolution éventuelle de ces relations.

Ainsi, la ou les relations de transposition peuvent être par exemple communiquées aux différents répéteurs par un centre de commande et de maintenance du réseau, et ce par voie radio de préférence.

Par ailleurs, dans le système GSM, chaque station de base est commandée par un contrôleur de station de base. Ce dernier doit avoir en mémoire les relations de transposition.

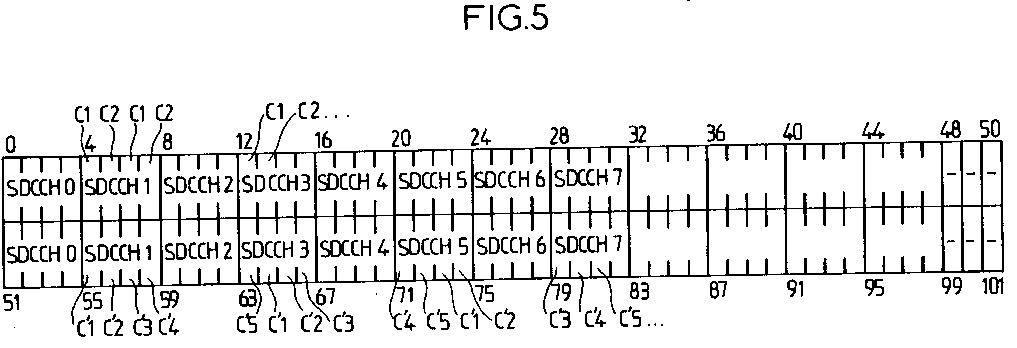

On va maintenant s'attacher à décrire, en relation avec les figures 3 et 4, la procédure d'accès. On appelle ici procédure d'accès la procédure suivie lorsqu'une station mobile cherche à accéder pour la première fois au réseau après avoir été mise sous tension, c'est-à-dire lorsqu'elle cherche à se connecter par voie radio à une station de base du réseau, principalement pour émettre et recevoir des communications.

On rappelle que, dans un réseau de type GSM en général, chaque station de base possède un canal de signalisation appelé BCCH (Broadcast Control CHannel), porté par la voie balise. Le principe de l'accès multiple à répartition dans le temps étant appliqué dans ce type de réseau, ce canal de signalisation est toujours émis par la station de base sur le premier intervalle de temps de chaque trame, noté TS0.

Lorsqu'une station mobile cherche à se connecter à une station de base, elle émet, sur le TS0 de la voie balise montante (ce canal est appelé RACH pour Random Access CHannel) un signal appelé demande d'accès et noté RA (Random Access).

A la réception de cette demande d'accès RA, le contrôleur de station de base BSC, par l'intermédiaire de la station de base, affecte à la station mobile un canal de trafic, c'est-à-dire une paire de fréquences (ou plusieurs lorsque l'on applique le saut de fréquences) et un intervalle de temps de rang déterminé. En outre, elle détermine l'avance temporelle avec laquelle la station mobile doit émettre ses signaux pour tenir compte du temps de propagation des ondes électromagnétiques entre la station mobile et la station de base.

Pour la station mobile MS située dans la zone d'ombre Z1, la signalisation (notée BCCH sur la figure 4) en provenance de BTSP, reçue par l'antenne A1 et par le récepteur RR11 du répéteur R1, est ré-émise par l'émetteur ER11 et l'antenne 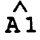 du répéteur R1 sur la transposée f_{R11} de la voie balise f_{P1} à destination de toutes les stations mobiles se trouvant dans la zone d'ombre Z1. C'est la fréquence f_{R11} que la station mobile MS entend et considère comme la voie balise descendante ; elle en déduit donc la fréquence f'_{R11}, transposée de la voie balise montante f'_{P1}.

Pour se connecter à BTSP, la station mobile émet alors une demande d'accès RA sur le TS0 de la fréquence f'_{R11} (voir figure 4).

Selon l'invention, au lieu de ré-émettre cette demande d'accès sur la voie balise montante f'_{P1}, le répéteur R1 la modifie, puis ré-émet une demande d'accès modifiée notée 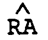 à destination de BTSP.

La modification de cette demande sert à indiquer à BTSP, et par son intermédiaire au contrôleur BSC dont elle dépend, que la demande d'accès provient d'une station mobile se trouvant dans une zone d'ombre. Elle sert en outre à indiquer, le cas échéant, à quelle classe de zones d'ombre appartient la zone d'ombre dans laquelle se trouve la station mobile MS.

On appelle classe de zones d'ombre l'ensemble de toutes les zones d'ombre utilisant le même jeu de fréquences transposées à l'intérieur d'une même cellule, lorsque plusieurs zones d'ombre existent à l'intérieur d'une même cellule. On a vu en effet que la répartition des fréquences transposées doit être effectuée de manière à éviter que des zones d'ombre proches les unes des autres utilisent des fréquences identiques. Toutefois, afin d'utiliser au mieux i le spectre de fréquences, on peut trouver plusieurs zones d'ombre associées à un même jeu de fréquences et suffisamment éloignées les unes des autres. Dans l'exemple choisi, les zones d'ombre Z1 et Z3 appartiennent à la même classe, et la zone d'ombre Z2 appartient à une autre classe.

Afin d'utiliser des jeux de fréquences transposées distincts, chaque classe de zones d'ombre peut être représentée par une relation de transposition différente.

Lorsque le BSC sait, d'après la demande d'accès modifiée 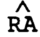 , que la station mobile MS se trouve dans une zone d'ombre, et connaît, toujours d'après 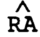 , la classe de cette zone d'ombre et donc la relation de transposition associée, il peut affecter à la station mobile MS, par l'intermédiaire de BTSP transmettant le message IA (Immediate Assignement), un canal, c'est-à-dire une fréquence (ou plusieurs lorsque l'on applique le saut de fréquences) et un intervalle de temps de rang déterminé, la ou les fréquences ainsi communiquées (f_{R11}, f_{R12}) étant les fréquences transposées des fréquences (f_{P1}, f_{P2}) qu'il lui aurait communiquées si elle se trouvait hors de la zone d'ombre Z1. La connaissance des fréquences dans le sens descendant implique nécessairement pour la station mobile MS celle des fréquences dans le sens montant.

La suite de la procédure d'accès se déroule sans changement par rapport au cas classique.

On a vu précédemment que, selon l'invention, la station mobile MS ne doit utiliser que des fréquences transposées. Si la procédure d'accès classique était suivie, le message IA contiendrait non pas les fréquences transposées, mais les fréquences de base associées de BTSP (f_{P1}, f_{P2}), ce qui ne conviendrait donc pas.

Selon un mode d'application particulier donné à titre purement illustratif, la modification opérée par le répéteur R1 sur la demande d'accès RA peut consister à ne pas ré-émettre RA sur le TS0, mais sur un autre canal, appelé canal d'accès modifié, toujours sur la fréquence de la voie balise f'_{P1}.

Bien entendu, le canal d'accès modifié doit être connu non seulement de BTSP, mais également du contrôleur BSC, de sorte que ce dernier s'attende à trouver sur ce canal d'accès modifié une demande d'accès provenant d'une station mobile située dans une zone d'ombre. Ce canal d'accès modifié ne peut être utilisé autrement que pour la transmission des demandes d'accès modifiées.

On décrit à présent, en relation avec la figure 5, une organisation temporelle possible des canaux de trafic et des canaux d'accès dans un schéma de trame à huit SDCCH (Standalone Dedicated Control CHannel).

Un schéma classique de trame à huit SDCCH est décrit en détail dans l'ouvrage intitulé "The GSM System for Mobile Communications", de M. MOULY et M.B. PAUTET, publié par les auteurs, aux pages 204 et 205.

Dans ce schéma, le temps est représenté sous la forme d'une hélice, et chaque case représente un intervalle de temps selon le principe de l'accès multiple à répartition dans le temps. Les intervalles de temps sont groupés par cycles de huit, et la trame comprend 102 cycles.

Dans la forme de trame la plus simple, un canal correspond à la répétition d'un intervalle de temps tous les huit intervalles de temps. En revanche, dans le schéma de trame à huit SDCCH, un canal donné comporte huit sous-canaux, chaque sous-canal étant dénommé SDCCH et correspondant à un ensemble de quatre intervalles de temps, un par cycle de huit sur quatre cycles consécutifs, à la même position temporelle par rapport à l'origine de ce cycle, et se répétant tous les 51 cycles.

Sur la figure 5, qui représente la trame dans le sens descendant uniquement, les SDCCH sont référencés SDCCH0 à SDCCH7. Pour des raisons de clarté de la description, on ne décrira pas ici l'utilisation des sous-canaux autres que les SDCCH, et l'on ne représentera pas les sept intervalles de temps séparant un intervalle de temps d'un SDCCH de l'intervalle de temps suivant.

Selon l'invention, on choisit dans ce schéma de trame de réserver quatre des huit SDCCH, par exemple SDCCH0, SDCCH2, SDCCH4, SDCCH6 au trafic, et les quatre autres, dits SDCCH dédiés, SDCCH1, SDCCH3, SDCCH5, SDCCH7 comme canaux d'accès modifiés.

S'il existe par exemple quatre classes de zones d'ombre, chacun des quatre intervalles de temps constituant chaque SDCCH dédié peut être réservé à une classe de zones d'ombre distincte. S'il existe moins ou plus de quatre classes de zones d'ombre, les intervalles de temps des SDCCH dédiés, dans leur ordre temporel, sont réservés les uns après les autres à chaque classe (en figure 5, on a représenté sur la première moitié de la trame un exemple avec deux classes de zones d'ombre C1 et C2, et sur la deuxième moitié de la trame un exemple avec cinq classes de zones d'ombre C'1 à C'5).

Les demandes d'accès RA, qui sont des messages de durée inférieure à celle d'un intervalle de temps, sont décodées, démodulées puis modulées et codées de nouveau et ré-émises par le répéteur R1 sur l'intervalle de temps d'un SDCCH dédié correspondant à la classe de la zone d'ombre Z1 dans laquelle se trouve la station mobile MS dont ils proviennent. Cette ré-émission est effectuée avec la même avance temporelle, dite avance temporelle partielle, image de la distance entre la station mobile MS et le répéteur R1, que celle avec laquelle le répéteur R1 a reçu le message RA.

A cet effet, il est bien sûr nécessaire que le répéteur R1 soit capable de mesurer cette avance temporelle. Il suffit pour cela de le doter des moyens adaptés, qui peuvent être similaires à ceux utilisés au niveau d'une station de base classique ayant à accomplir cette fonction.

En outre, la connaissance de l'avance temporelle partielle est nécessaire au répéteur R1 pour décoder les demandes d'accès RA reçues de la station mobile MS.

Le fait pour les répéteurs de ré-émettre les demandes d'accès modifiées avec l'avance temporelle partielle permet à la station de base BTSP de déduire directement l'avance temporelle totale, somme de l'avance temporelle partielle et de celle représentant la distance répéteur R1-station de base BTSP. C'est cette avance temporelle totale qui devra être communiquée à la station mobile MS pour le retard de ses émissions ultérieures, puisque tous les signaux émis par la station mobile MS sont relayés par le répéteur R1.

BTSP, qui décode les demandes d'accès modifiées 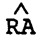 , connaît, grâce à son horloge interne, la référence temporelle de l'intervalle de temps dans lequel elles ont été émises. Elle transmet cette référence temporelle au BSC. La configuration de la trame modifiée étant connue du BSC, ce dernier peut en déduire la classe de la zone d'ombre, et donc affecter à la station mobile MS un canal de trafic adapté.

Lorsque le principe du saut de fréquences est appliqué dans la cellule CP, c'est-à-dire que, sur un même canal de trafic, les fréquences porteuses utilisées changent selon une loi prédéterminée, dite loi de répétition, et lorsque le nombre des fréquences utilisées par BTSP est supérieur au nombre de fréquences transposées utilisées par le répéteur R1 (c'est-à-dire que certaines des fréquences de base n'ont pas de fréquence transposée associée), le contrôleur BSC doit affecter à la station mobile MS un canal de trafic n'utilisant que des fréquences répétées associées à des fréquences transposées du répéteur R1.

Une autre solution possible est d'affecter au mobile un canal sans saut de fréquence, la fréquence de ce canal ayant bien évidemment une transposée au niveau de R1. Un canal sans saut de fréquences est typiquement le canal de signalisation (BCCH). Toutefois, il est possible, lors de la configuration du réseau, de prévoir d'autres canaux sans saut de fréquences.

Selon un autre mode de mise en oeuvre, on peut prévoir que le répéteur R1 applique, outre la relation de transposition T, une loi de répétition qui lui est propre et qui peut être différente de celle appliquée par la station de base BTSP pour effectuer le saut de fréquences.

Dans ce cas, toutefois, le canal de signalisation porté par la voie balise est toujours un canal sans saut de fréquences, aussi bien au niveau de la station de base BTSP qu'au niveau du répéteur R1.

Ce mode de mise en oeuvre ne pose pas de problème dans le cas où BTSP et R1 utilisent le même nombre de fréquences.

Lorsque le répéteur R1 utilise moins de fréquences que la station de base BTSP (notamment lorsque peu de fréquences sont disponibles pour les zones d'ombre), on peut envisager de ne pas appliquer le saut de fréquences dans Z1 alors qu'il est appliqué dans CP. Dans ce cas, la loi de répétition propre à Z1 est bien différente de celle associée à CP.

Lorsque le répéteur R1 utilise plus de fréquences que la station de base BTSP (par exemple en cas de fading dans la zone d'ombre Z1), c'est-à-dire que certaines fréquences de base sont associées à plus d'une fréquence transposée, on peut au contraire envisager d'appliquer le saut de fréquences dans Z1 mais pas dans CP. Là encore, la loi de répétition propre à Z1 est bien différente de celle associée à CP.

Dans ce dernier cas, il faut préciser que, dans le sens descendant, une loi adaptée de sélection de la fréquence transposée doit être appliquée par le répéteur R1 pour ré-émettre les signaux reçus, puisqu'il a la possibilité de ré-émettre sur plus d'une fréquence transposée un signal porté par une fréquence de base unique.

Lorsque les lois de répétition utilisées par les répéteurs sont différentes de celles utilisées par les stations de base, il est possible de définir les classes de zones d'ombre non seulement par la relation de transposition associée, mais en outre par la loi de répétition. Ceci permet d'ajouter à la diversité des classes de répéteurs et donc de diminuer encore les risques d'interférences.

En outre, dans le cas où le saut de fréquences est appliqué dans un réseau de type GSM, la relation de transposition doit être monotone et croissante. En effet, dans les réseaux de type GSM, une loi de répétition est définie par une liste des fréquences à utiliser et par une loi de choix dans cette liste, cette loi de choix permettant de déterminer qu'à un instant donné, une fréquence donnée, par exemple la i-ième, doit être utilisée.

Si la relation de transposition n'est pas monotone et croissante, par exemple si elle inverse l'ordre des deux premières fréquences, lorsque BTSP émet sur la première de ces deux fréquences, le répéteur R1 ré-émet sur la deuxième fréquence transposée au lieu de ré-émettre sur la première.

On va maintenant décrire les particularités de la procédure de handover liées au procédé selon l'invention.

De manière classique, lorsqu'une station mobile est connectée à une station de base, elle connaît les fréquences des voies balises des cellules voisines. Ainsi, elle "écoute" ces voies balises sur le canal de signalisation et mesure leur niveau de réception ainsi que celui de la voie balise de la cellule à laquelle elle est rattachée, dite ancienne cellule. Ces mesures sont transmises à la station de base de l'ancienne cellule, qui effectue des comparaisons entre les différents niveaux de réception.

Dès que le niveau de réception de la voie balise de l'ancienne cellule est inférieur au niveau de réception de l'une des autres voies balises, la station de base en informe le contrôleur BSC pour lui indiquer qu'un changement de station de base, ou handover, est souhaitable. La station mobile reçoit alors du BSC, par l'intermédiaire de la station de base de l'ancienne cellule, un ordre de commande de handover lui affectant un canal pour le trafic. La station mobile émet ensuite des messages d'accès spécifiques à la procédure de handover à destination de la station de base de la nouvelle cellule à laquelle elle doit être rattachée, afin que cette dernière détermine l'avance temporelle que la station mobile doit utiliser.

Selon l'invention, outre les fréquences des voies balises des cellules voisines, une station mobile se trouvant dans CP, Z1, Z2 ou Z3 connaît les fréquences transposées associées à la fréquence f_{P1} dans Z1, Z2 et Z3, soit f_{R11} et f_{R21} (on rappelle que Z1 et Z3 appartiennent à la même classe et ont donc les mêmes fréquences transposées), et mesure de la même manière leur niveau de réception.

La station mobile MS, qui se trouve dans la zone d'ombre Z1, envoie ses mesures sur la transposée de la voie balise montante f'_{R11} à destination de BTSP, ces mesures étant transmises à BTSP sur la voie balise montante f'_{P1} par l'intermédiaire de R1. Lorsqu'il ressort de ces mesures que MS doit être rattachée à CP plutôt qu'à la zone d'ombre Z1, c'est-à-dire par exemple que le niveau de réception de f_{P1} est supérieur à celui de f_{R11}, une procédure de handover habituelle est suivie, comme si la zone d'ombre Z1 était une cellule normale et le répéteur R1 une station de base classique.

Par ailleurs, lorsqu'il ressort des mesures d'une station mobile rattachée à BTSP et se trouvant hors de toute zone d'ombre, ou bien rattachée à BTSP par l'intermédiaire d'un répéteur couvrant une première zone d'ombre que le niveau de réception de f_{R11} est supérieur à celui de f_{P1} ou f_{R22}, BTSP communique au BSC la voie balise la mieux entendue. Le BSC sait que cette voie balise ne peut être la voie balise d'une cellule voisine, et n'est pas celle de l'ancienne cellule. Il suffit alors au contrôleur BSC d'appliquer à cette fréquence l'inverse de la relation de transposition pour connaître la classe de la zone d'ombre associée et ainsi pour affecter, dans un message adapté, un canal de trafic correct à la station mobile, c'est-à-dire un canal de trafic utilisant des fréquences transposées.

Le reste de la procédure se déroule de la même manière que dans le handover classique.

On rappelle que le contrôleur BSC connaît toutes les fréquences transposées utilisées dans les différentes zones d'ombre. D'autre part, la station de base BTSP doit nécessairement avoir en mémoire, et donc connaître, les fréquences transposées associées à sa voie balise, afin d'éviter de déclencher un handover vers elle-même.

Selon un dernier aspect de la présente invention, la commande et la surveillance des répéteurs peut être effectuée par voie radio par le centre de commande et de maintenance en utilisant par exemple les SDCCH du sens descendant correspondant aux SDCCH dédiés dans le sens montant.

La commande peut par exemple consister à envoyer aux répéteurs des informations sur le changement de configuration radio (changement des canaux d'accès modifiés, modification de la relation de transposition associée, etc...).

Pour ce qui est de la surveillance, elle peut par exemple consister à envoyer périodiquement au répéteur une demande d'état, à laquelle le répéteur répond par la voie radio.

Bien entendu, l'invention n'est pas limitée au mode de réalisation qui vient d'être décrit.

En premier lieu, le procédé selon l'invention peut être appliqué dans le cas d'un système cellulaire, de type GSM ou non.

La méthode de modification des demandes d'accès peut être différente de celle présentée, du moment qu'elle permet aux moyens de commande de savoir qu'un mobile se trouve dans une zone d'ombre et de connaître le cas échéant la classe de cette zone d'ombre.

Par exemple, au lieu d'utiliser la moitié des SDCCH dans une trame à huit SDCCH, on peut utiliser un canal complet d'une trame plus simple.

D'autre part, il n'est pas nécessaire, pour modifier la demande d'accès RA reçue, de la décoder puis de la démoduler au préalable. Toutefois, dans ce cas, même si la mise en oeuvre est moins complexe au niveau du répéteur, elle entraîne une perte d'intervalles de temps, notamment parce qu'un intervalle de temps complet par classe est nécessaire lorsque plusieurs classes de zones d'ombre existent. On peut toutefois envisager par exemple d'utiliser moins d'intervalles de temps qu'il n'y a de classes de zones d'ombre, en ne ré-émettant que les demandes d'accès dont le niveau est supérieur à un seuil prédéterminé, ce qui permettrait de réduire le nombre des canaux de trafic transformés en canaux d'accès modifiés.

Par ailleurs, au lieu de suivre une procédure de handover lors du passage d'un répéteur d'une zone d'ombre à une autre ou à une station de base, ou du passage d'une station de base au répéteur d'une zone d'ombre, il est possible d'envoyer à la station mobile un message du type "Frequency Redefinition" selon la terminologie GSM. Ce message est un message classique destiné à la reconfiguration des fréquences dans le réseau, et il comportera dans ces différents cas les nouvelles fréquences à utiliser par la station mobile, par exemple les fréquences transposées de la zone d'ombre à laquelle elle doit être rattachée.

Une autre application possible du procédé selon l'invention consiste à placer des répéteurs en bout de portée des émetteurs des stations de base, notamment dans des milieux de transmission bi-directionnels (routes, voies de chemin de fer) pour des cellules de très grand rayon (35 km). On augmente ainsi la portée de la cellule sans augmenter le nombre de sites de transmission nécessitant des câblages, ce qui est particulièrement avantageux.

Enfin, on pourra remplacer tout moyen par un moyen équivalent sans sortir du cadre de l'invention.

## Revendications

**1/** Procédé de couverture des zones d'ombre d'un système cellulaire de radiocommunications mobiles comprenant une pluralité de cellules, chacune desdites cellules étant couverte par une station émétrice/réceptrice dite station de base, destinée à émettre et à recevoir, sur différentes fréquences, dites fréquences de base, des signaux radio à destination et en provenance de stations mobiles évoluant dans ladite cellule, et chaque zone d'ombre appartenant à l'une desdites cellules, un répéteur radio étant associé à chacune desdites zones d'ombre pour recevoir, amplifier et ré-émettre lesdits signaux radio à destination et en provenance de stations mobiles évoluant dans ladite zone d'ombre, le répéteur destiné à couvrir une zone d'ombre donnée dépendant de la station de base de la cellule dans laquelle se trouve ladite zone d'ombre, ledit procédé étant tel que :
- un signal radio reçu par l'un desdits répéteurs en provenance de ladite station de base et porté par une fréquence de base est ré-émis à destination de l'une desdites stations mobiles par ledit répéteur sur une fréquence, dite fréquence transposée, différente de ladite fréquence de base et associée à cette dernière selon une relation, dite de transposition, connue de moyens de commande de ladite station de base,
- inversement, un signal radio reçu par l'un desdits répéteurs en provenance de l'une desdites stations mobiles et porté par une fréquence transposée est ré-émis à destination de ladite station de base par ledit répéteur sur la fréquence de base associée à ladite fréquence transposée, la fréquence de la voie balise de chaque cellule étant toujours associée à une fréquence transposée, dite voie balise transposée au niveau de chacun desdits répéteurs, ledit procédé étant caractérisé en ce que, lorsqu'une station mobile située dans une zone d'ombre d'une cellule émet, sur un canal spécifique dit canal d'accès, porté par une voie balise transposée, un signal radio, appelé demande d'accès, en vue d'établir une connexion radio avec la station de base de ladite cellule, afin qu'un canal dit de trafic lui soit affecté, le répéteur destiné à couvrir ladite zone d'ombre, après avoir reçu ladite demande d'accès, la retransmet à ladite station de base sur ladite voie balise après l'avoir modifiée de sorte que lesdits moyens de commande, auxquels est retransmise par ladite station de base ladite demande d'accès modifiée, sont capables de déterminer que ladite station mobile se trouve dans une zone d'ombre, et de déduire la relation de transposition qui permet d'obtenir les fréquences transposées associées à cette zone d'ombre, de sorte que le signal émis par lesdits moyens de commande et destiné à indiquer à ladite station mobile quel canal de trafic et quelles fréquences elle doit utiliser pour l'émission et la réception, contient lesdites fréquences transposées au lieu des fréquences de base associées.

**2/** Procédé selon la revendication 1 caractérisé en ce que le répéteur qui reçoit une demande d'accès en provenance d'une station mobile, émise par ladite station mobile comme si cette dernière se trouvait au pied de ladite station de base, c'est-à-dire avec une avance temporelle nulle par rapport à ladite station de base, ré-émet la demande d'accès modifiée correspondante avec une avance temporelle, dite partielle, correspondant à la distance qui le sépare de ladite station mobile, de sorte que l'avance temporelle indiquée ensuite par ladite station de base à ladite station mobile, et à utiliser ultérieurement par ladite station mobile pour émettre des signaux radio à destination de ladite station de base correspond à la somme de ladite avance temporelle partielle et de l'avance temporelle correspondant à la distance séparant ledit répéteur de ladite station de base.

**3/** Procédé selon l'une des revendications 1 ou 2 caractérisé en ce que, lorsque le saut de fréquences est utilisé dans une cellule dans laquelle se trouve une zone d'ombre, et lorsque le répéteur destiné à couvrir ladite zone d'ombre utilise moins de fréquences que la station de base de ladite cellule, le canal de trafic affecté à une station mobile se trouvant dans ladite zone d'ombre est porté par des fréquences de base ayant chacune une fréquence transposée associée.

**4/** Procédé selon l'une des revendications 1 ou 2 caractérisé en ce que, lorsque le saut de fréquences est utilisé dans une cellule dans laquelle se trouve une zone d'ombre, et lorsque le répéteur destiné à couvrir ladite zone d'ombre utilise moins de fréquences que la station de base de ladite cellule, le canal de trafic affecté à une station mobile se trouvant dans ladite zone d'ombre est un canal sans saut de fréquences.

**5/** Procédé selon l'une des revendications 1 à 4 caractérisé en ce que toutes lesdites voies balises transposées d'une même voie balise sont mises en mémoire au sein desdits moyens de commande.

**6/** Procédé selon l'une des revendications 1 à 5 caractérisé en ce que, pour éviter les interférences, le choix des fréquences transposées est tel que des zones d'ombre voisines utilisent des jeux de fréquences transposées distincts, de manière à définir des classes de zones d'ombre, une classe de zones d'ombre comprenant toutes les zones d'ombre utilisant le même jeu de fréquences transposées et étant représentée par une relation de transposition différente de celles représentant les autres classes de zones d'ombre.

**7/** Procédé selon la revendication 6 caractérisé en ce que, lorsque le saut de fréquences est appliqué dans une cellule par l'intermédiaire d'une loi dite de répétition, le saut de fréquences est également appliqué dans les zones d'ombre se trouvant dans ladite cellule, les lois de répétition utilisées par les répéteurs couvrant lesdites zones d'ombres étant soit identiques, soit différentes de la loi de répétition utilisée par la station de base de ladite cellule, le canal de signalisation porté par la voie balise étant toujours un canal sans saut de fréquences.

**8/** Procédé selon la revendication 7 caractérisé en ce que lesdits moyens de commande déduisent de ladite demande d'accès modifiée la classe de ladite zone d'ombre.

**9/** Procédé selon la revendication 8 caractérisé en ce que, lorsque ledit système cellulaire de radiocommunications utilise le principe de l'accès multiple à répartition dans le temps, la modification de ladite demande d'accès consiste pour le répéteur à ré-émettre ladite demande d'accès sur un canal, dit canal d'accès modifié, ayant une position temporelle différente de celle du canal d'accès, ledit canal d'accès modifié étant connu desdits moyens de commande comme spécifique à la ré-émission des demandes d'accès des stations mobiles provenant d'une zone d'ombre de classe prédéterminée.

**10/** Procédé selon la revendication 9 caractérisé en ce que les canaux dans le sens descendant, c'est-à-dire dans le sens station de base vers station mobile, associés aux canaux d'accès modifiés, sont soit inutilisés pour le trafic, soit utilisés pour la commande et le contrôle des répéteurs.

**11/** Procédé selon l'une des revendications 1 à 10 caractérisé en ce que, lorsqu'une station mobile se trouvant dans l'une desdites zones d'ombre et rattachée à une station de base par l'intermédiaire du répéteur couvrant ladite zone d'ombre doit être rattachée directement à la station de base sous la couverture de laquelle se trouve ladite zone d'ombre, une procédure de handover est suivie.

**12/** Procédé selon l'une des revendications 5 à 10 caractérisé en ce que, lorsqu'une station mobile rattachée à une station de base soit directement, soit par l'intermédiaire d'un répéteur couvrant une première zone d'ombre, doit être rattachée au répéteur d'une deuxième zone d'ombre, ladite station de base communique auxdits moyens de commande la voie balise transposée associée à ladite deuxième zone d'ombre, et lesdits moyens de commande en déduisent la relation de transposition qui permet d'obtenir les fréquences transposées associées à ladite deuxième zone d'ombre, de sorte que le signal émis par lesdits moyens de commande et destiné à indiquer à ladite station mobile quel canal de trafic et quelles fréquences elle doit utiliser pour l'émission et la réception, contient lesdites fréquences transposées utilisées par le répéteur de la deuxième zone d'ombre au lieu des fréquences de base associées.

**13/** Procédé selon la revendication 12 caractérisé en ce que ladite station de base a en mémoire toutes les voies balises transposées associées à sa voie balise par ladite relation de transposition.

**14/** Procédé selon l'une des revendications 1 à 13 caractérisé en ce que ladite relation de transposition est monotone et croissante lorsque ledit système de radiocommunications applique le principe du saut de fréquences.

**15/** Procédé selon l'une des revendications 1 à 14 caractérisé en ce que ladite relation de transposition à utiliser par chaque répéteur lui est fournie par des moyens de commande et de maintenance dudit réseau, cette relation pouvant être modifiée.

**16/** Répéteur radio caractérisé en ce qu'il est adapté pour la mise en oeuvre du procédé selon l'une des revendications 1 à 15.

**17/** Répéteur selon la revendication 16 caractérisé en ce qu'il comporte :
- au moins un émetteur/récepteur,
- au moins une antenne associée audit émetteur/récepteur,
- des moyens pour transposer la fréquence des signaux reçus en provenance desdites stations mobiles ou desdites stations de base,
- des moyens pour appliquer le saut de fréquences,
- des moyens pour déterminer l'avance temporelle correspondant à la distance qui le sépare d'une station mobile,
- des moyens pour modifier les demandes d'accès en provenance desdites stations mobiles,
- des moyens pour sa commande et sa maintenance par voie radio par des moyens de commande et de maintenance du réseau.
